# EUROPÄISCHE PATENTSCHRIFT

(11) **EP 0 736 075 B1**
(45) Veröffentlichungstag und Bekanntmachung des Hinweises auf die Patenterteilung: **10.11.1999**
(21) Anmeldenummer: 95903330.9
(22) Anmeldetag: 08.12.1994
(51) Int. Cl.: C09D 5/16, A01N 25/34, B27K 3/34, B27K 3/50, B27K 3/52

(54) **ANTIFOULING-MITTEL**
ANTI-FOULING AGENT
PRODUIT ANTISALISSURES

(30) Priorität: 21.12.1993 DE 4343597; 17.03.1994 DE 4409039
(43) Veröffentlichungstag der Anmeldung: 09.10.1996
(73) Patentinhaber: BAYER AG, 51368 Leverkusen (DE)
(72) Erfinder: KUGLER, Martin, D-42799 Leichlingen (DE); LONDERSHAUSEN, Michael, D-40699 Erkrath (DE); SCHRAGE, Heinrich, D-47800 Krefeld (DE); UHR, Hermann, D-51379 Leverkusen (DE); KUNISCH, Franz, D-51519 Odenthal (DE)
(86) Internationale Anmeldenummer: EP9404087
(87) Internationale Veröffentlichungsnummer: WO9517478

(56) Entgegenhaltungen:
- EP-A- 0 111 452
- WO-A-90/06975
- WO-A-92/20747
- DE-A- 2 402 197
- DE-A- 2 614 725
- DE-A- 3 024 467
- DE-B- 2 110 341
- DE-C- 3 414 244

## Beschreibung

Die vorliegende Erfindung betrifft ein Verfahren und Mittel zum Schutz vor Bewuchs von Gegenständen, insbesondere von Schiffskörpem, Sieben, Netzen, Bauwerken, Kaianlagen, Signalanlagen, welche mit See- oder Brackwasser in Verbindung kommen.

Bewuchs durch Arten der Gruppe Lepadomorpha (Entenmuscheln), wie verschiedene Lepas und Scalpellum-Arten, oder durch Arten der Gruppe Balanomorpha (See-pocken), wie Balanus- oder Pollicipes-Species, erhöht den Reibungswiderstand von Schiffen und führt in der Folge durch erhöhten Energieverbrauch und häufige Trockendockaufenthalte zu einer deutlichen Steigerung der Betriebskosten.

Neben dem Bewuchs durch Algen, beispielsweise Ectocarpus sp. und Ceramium sp., kommt insbesondere dem Bewuchs durch sessile Entomostraken-Gruppen, welche unter dem Namen Cirripedia (Rankenfußkrebse) zusammengefaßt werden, besondere Bedeutung zu.

Des weiteren ist bekannt, daß Insekten durch Wirkstoffe, welche auf die Metamorphose vom Larvenstadium zu adulten Tier einwirken, bekämpft werden können (K.H. Büchel, Pflanzenschutz und Schädlingsbekämpfung, Georg Thieme Verlag, Stuttgart 1977 Farm Chemicals Handbook, Meister Publ. Comp. 1993; The Agrochemical Handbook, Third Edition, Royal Society of Chemistry, Cambridge 1991).

Es wurde nun gefunden, daß die Insektizide allein oder in Kombination mit anderen Wirkstoffen, eine hervorragende Antifouling (Antibewuchs)-Wirkung aufweisen.

Dabei ist von Vorteil, daß, da herkömmliche Antibewuchsmittel einen hohen Gehalt an Schwermetallen wie z.B. Zinn oder Kupfer aufweisen, durch Einsatz der erfindungsgemäßen Insektizide nun auf den Einsatz von Schwermetallverbindungen wie z.B. Bis(trialkylzinn)-sulfiden, Tri-n-butylzinnlaurat, Tri-n-butylzinnchlorid, Kupfer(I)-oxid, Triethylzinnchlorid, Tri-n-butyl(2-phenyl-4-chlorphenoxy)-zinn, Tri-butylzinnoxid, Molybdändisulfid, Antimonoxid, polymerem Butyltitanat, Phenyl-(bis-pyridin)-wismutchlorid, Tri-n-butylzinnfluorid, Manganethylenbisdithiocarbamat, Zinkdimethyldithiocarbamat, Zinkethylenbisdithiocarbamat, Zinksalz von 2-Pyridinthiol-1-oxid, Bisdimethyldithiocarbamoylzinkethylenbisdithiocarbamat, Zinkoxid, Kupfer(I)-ethylen-bis-dithiocarbamat, Kupferthiocyanat, Kupfernaphthenat und Tributylzinnhalogeniden verzichtet werden oder die Konzentration dieser Verbindungen entscheidend reduziert werden kann.

Gegenstand der Anmeldung sind daher Antifouling-Mittel, enthaltend neben den für Antifouling-Mittel üblichen Bestandteile mindestens ein Insektizid mit entwicklungshemmender Wirkung.

Bevorzugt sind Insektizide mit entwicklungshemmender Wirkung, die in der Lage sind, die Metamorphose von Larven der Crustaceen zum adulten Stadium zu inhibieren.

Die erfindungsgemäß einsetzbaren Insektizide sind im allgemeinen bekannt und können aus unterschiedlichen Strukturklassen stammen.

Besonders bevorzugte Verbindungen im Sinne der Erfindung sind Benzoylharnstoffe wie Triflumuron, Chlorfluazuron, Diflubenzuron, Flufenoxuron, Flucycloxuron, Hexaflumuron, Penfluron, Teflubenzuron, Nitroimine und Nitromethylene wie 1-[(6-Chlor-3-pyridinyl)-methyl]-4,5-dihydro-N-nitro-1H-imidazol-2-amin (Imidacloprid), N-[(6-Chlor-3-pyriyl)methyl-]N²-cyano-N¹-methylacetamide (NI-25); 1-[4-(4-Chlorphenoxy)-3,5-dichlorphenyl]-3-(2,6-difluor-benzoyl)-harnstoffündN-[[2,5-Dichlor-4-(1,1,2,3,3,3-hexafluorpropoxy)-phenyl]-amino]-carbonyl]-2,6-difluorbenzamid.

Ebenfalls bevorzugt sind Entwicklungsinhibitoren aus anderen Strukturklassen wie beispiel sweise Benzoesäure-[2-Benzoyl-1-(1,1-dimethylethyl)]-hydrazid, 2,6-Dimethoxy-N-[5-]4-(pentafluorethoxy)-phenyl[-1,3,4-thiadiazol-2-yl]-benzamid, N-Cyclopropyl-1,3,5-triazin-2,4-triamin, 2-(4-Phenoxyphenoxy)-ethyl-ethylcarbamat, 1-(Decycloxy)-4-[(6-methoxy-4-hexinyl)-oxy]benzene, (2-Propinyl)-4-methoxy-benzoat, Fenoxycarb, Pyriproxyfen, Triarathene, Thiapronil, Hexythiazox, Clofentezine, 4-Chloro-5-(6-chloro-3-pyridylmethoxy)-2-(3,4-dichlorophenyl)-pyridazin-3(2H)-one, Buprofezin, Hydroprene, Kinoprene, Methoprene, Cycloprate Gusathin, Padan, Paraxon, Tribunil, Isomere und Triprene.

Die hier genannten Wirkstoffe sind nur beispielhaft genannt, strukturell verwandte Wirkstoffe mit insektizider oder entwicklungsinhibitorischer Wirkung eignen sich prinzipiell ebenfalls für den Antifouling-Einsatz. Beispielhaft und vorzugsweise seien auch die folgenden Insektizide genannt:
Phosphorsäureester wie Azinphos-ethyl, Azinphos-methyl, -1(4-Chlorphenyl)-4-(O-ethyl, S-propyl)phosphoryloxy-pyrazol, Chlorpyrifos, Coumaphos, Demeton, Demeton-S-methyl, Diazinon, Dichlorvos, Dimethoate, Ethoate, Ethoprophos, Etrimfos, Fenitrothion, Fenthion, Heptenophas, Parathion, Parathion-methyl, Phosalone, Phoxim, Pirimiphos-ethyl, Pirimiphos-methyl, Profenofos, Prothiofos, Sulprofos, Triazophos und Trichlorphon;
Carbamate wie Aldicarb, Bendiocarb, -2-(1-Methylpropyl)-phenylmethylcarbamat, Butocarboxim, Butoxycarboxim, Carbaryl, Carbofuran, Carbosulfan, Cloethocarb, Isoprocarb, Methomyl, Oxamyl, Pirimicarb, Promecarb, Propoxur und Thiodicarb; Organosilicium verbindungen, vorzugsweise Dimethyl(phenyl)silyl-methyl-3-phenoxybenzylether wie Dimethyl-(4-ethoxyphenyl)-silylmethyl-3-phenoxybenzylether oder
(Dimethylphenyl)-silyl-methyl-2-phenoxy-6-pyridylmethyletherwie z.B. Dimethyl-(9-ethoxy-phenyl)-silylmethyl-2-phenoxy-6-pyridylmethylether oder [(Phenyl)-3-(3-phenoxyphenyl)-propyl](dimethyl )-silane wie z.B. (4-Ethoxyphenyl)-[3-(4-fluoro-3 -phenoxyphenyl-propyl]dimethyl-silan, Sulafluofen;
Pyrethroide wie Allethrin, Alphamethrin, Bioresmethrin, Byfenthrin, Cycloprothrin, Cyfluthrin, Decamethrin, Cyhalothrin, Cypermethrin, Deltramethrin, Alpha-cyano-3-phenyl-2-methylbenzyl-2,2-dimethyl-3-(2-chlor-2-trifluor-methylvinyl)cyclopropancarboxylat, Fenpropathrin, Fenfluthrin, Fenvalerate, Flucythrinate, Flumethrin, Fluvalinate, Permethrin, Resmethrin und Tralomethrin;
Abamectin, AC 303, 630, Acephate, Acrinathrin, Alanycarb, Aldeoxycarb, Aldrin, Amitraz, Azamethiphos, Bacillus thuringiensis, Phosmet, Phosphamidon, Phosphine, Prallethrin, Propaphos, Propetamphos, Prothoate, Pyraclofos, Pyrethirns, Pyridaben, Pyridafenthion, Quinalphos, RH-7988, Rotenone, Sodium fluoride, Sodium hexafluorosilicate, Sulfotep, Sulforyl fluoride, Tar Oils, Tefluthrin, Temephos, Terbufos, Tetrachlorvinphos, Tetramethrin, O-2-tert.-Butyl-pyrimidin-5-yl-o-isopropyl-phosphorothiate, Thiocyclam, Thiofanox, Thiometon, Tralomethrin, Triflumuron, Trimethacarb, Vamidothion, Verticillium, Lacanii, XMC, Xylylcarb, Benfuracarb, Bensultap, Bifenthrin, Bioallethrin, MERbioallethrin, (S)-cyclopentenyl isomer, Bromophos, Bromophos-ethyl, Cadusafos, Calcium Polysulfide, Carbophenothion, Cartap, Chinomethionat, Chlordane, Chlorfenvinphos, Chlormephos, Chloropicrin, Chlorpyrifos, Cyanophos, Beta-Cyfluthrin, Alphacypermethrin, Cyophenothrin, Cyromazine, Dazomet, DDT, Demeton-S-methylsulphon, Diafenthiuron, Dialifos, DEicrotophos, Dinoseb, Deoxabenzofos, Diaxacarb, Disulfoton, DNOC, Empenthrin, Endosulfan, EPN, Esfenvalelrate, Ethiofencarb, Ethion, Etofenprox, Fenobucarb, Fensulfothion, Fipronil, Flufenprox, Fonofos, Formetanate, Formoothion, Fosmethilan, Furathocarb, Heptachlor, IPSP, Isazofos, Isofenphos, Isoprothiolane, Isoxathion, Iodfenphos, Kadethrin, Lindane, Malthion, Mecarbam, Mephosfolan, Mercurous, chloride, Metam, Metarthizum, anisopliae, Methacrifos, Methamidophos, Methidathion, Methiocarb, Methoxychlor, Methyl isothiocyanate, Metholcarb, Mevinphos, Monocrotophos, Naled, Neodidprion sertifer NPV, Nicotine, Omethoate, Oxydemeton-methyl, Pentachlorophenol, Petroleum oils, Phenothrin, Phenthoate, Phorate.

Darüber hinaus sind synergistische Effekte bei Kombinationen mehrerer der genannten Insektizide zu beobachten. Die erfindungsgemäßen Entwicklungshemmer werden vorzugsweise auch in Kombination mit Algiziden, Herbiziden, Fungiziden, Molluskiziden bzw. anderen Antifoulingwirkstoffen eingesetzt, wobei ebenfalls synergistische Effekte beobachtet werden.

Als Kombinationspartner für die erfindungsgemäßen Antifouling-Mittel werden vorzugsweise Algizide wie Diuron, Dichlorophen, Endothal, Fentinacetat, Quinoclamine, Molluscicide wie Fentinacetat, Metaldehyd, Methiocarb, Niclosamid, Thiodicarb und Trimethacarb, Fungizide wie Dichlofluanid, Tolylfluanid, Fluorfolpet und Azole wie Tebuconazole oder herkömmliche Antifoulingwirkstoffe wie 2-(N,N-Dimethylthiocarbamoylthio)-5-nitrothiazyl, Tetrabutyldistannoxan, 2-tert.-Butylamino-4-cyclopropylamino-6-methylthio-1,3,5-triazin,4,5-Dichloro-2-n-octyl-4-isothiazolin-3-on, 2,4,5,6-Tetrachloroisophthalonitril, Tetramethylthiuramdisulfid, 2,4,6-Trichlorphenylmaleinimid, 2,3,5,6-Tetrachlor-4-(methylsulfonyl)-pyridin, Diodmethylparatrylsulfon, Thiabendazol, Tetraphenylboronpyridinsalz, Kalium-, Natrium- und Zinksalz von 2-Pyridinthiol-1-oxid eingesetzt.

Die erfindungsgemäßen Antifoulingmittel enthalten des weiteren die üblichen Bestandteile wie sie z.B. in Ungerer, Chem. Ind. 37 (1985), 730-732 und Williams, Antifouling Marin Coatings 1973, Park Ridge: Noyes 1973 beschrieben werden.

Übliche Bestandteile in Antifouling-Anstrichmittel sind insbesondere Bindemittel.

Beispiele für Bindemittel sind Polyvinylchlorid in einem Lösungsmittelsystem, chlorierter Kautschuk in einem Lösungsmittelsystem, Acrylharze in einem Lösungsmittelsystem, insbesondere in einem wäßrigen System, Vinylchlorid/Vinylacetat-Copolymersysteme in Form wäßriger Dispersionen oder in Form von organischen Lösungsmittelsystemen, Butadien/Styrol-Kautschuke, Butadien/Acrylnitril-Kautschuke, Butadien/Styrol/Acrylnitril-Kautschuke, trocknende Öle, wie Leinsamenöl, Asphalt sowie Epoxyverbindungen, Harzester oder modifizierte Hartharze in Kombination mit Teer oder Bitumina, Chlorkautschuk, chloriertes Polypropylen und Vinylharze.

Gegebenenfalls enthalten die Anstrichmittel auch anorganische Pigmente, organische Pigmente oder Farbstoffe, welche vorzugsweise in Seewasser unlöslich sind. Ferner können die Anstrichmittel Materialien, wie Kolophonium und/oder Kolophoniumderivate enthalten, um eine gesteuerte Freisetzung der erfindungsgemäßen Entwicklungshemmer zu ermöglichen. Die Anstriche können ferner Weichmacher, die rheologischen Eigenschaften beeinflussende Modifizierungsmittel sowie andere herkömmliche Bestandteile enthalten. Auch in Selfpolishing-Antifouling-Systemen können die erfindungsgemäßen Verbindungen oder eingangs erwähnte Kombinationen eingearbeitet werden.

Beispielhafte Rezepturen, in denen die beschriebenen Wirkstoffe bzw. Wirkstoffkombinationen bevorzugt eingesetzt werden. werden in der DE 27 32 145 und EP 05 26 441 beschrieben.

Die erfindungsgemäßen Mittel ermöglichen in vorteilhafter Weise, die bisher verfügbaren mikrobiziden Mittel durch effektivere zu ersetzen. Sie zeigen eine gute Stabilität und haben in vorteilhafter Weise ein breites Wirkungsspektrum.

### Beispiel 1

An Stelle der direkten Testung von Balaniden wurde für die Suche nach auf Crustaceae entwicklungsinhibitorisch wirksamen Substanzen als Testsystem Artemia salina verwendet.

Dieser Salinenkrebs ist aufgrund seiner vielen Larvenstadien und bereits etablierter Prüfsysteme, welche international anerkannt sind, gut geeignet. Aufgrund der unterschiedlichen Empfindlichkeit der Nauplienstadien wurden zur Testung synchronisierte Populationen verwendet (R.B. Sleet et K. Brendel: Homogeneous populations of Artemia nauplii and their potential usw for in vitro testing in developmental toxicology, Teratogenesis, Carcinogenesis and Mtagenesis 5; 41-54 (1985)). Die Prüfungen wurden nach der durch Sorgeloos und Mitarbeiter publizierten Vorschrift durchgeführt (P. Sorgeloos, C.R. van der Wielen et G. Persoone: The use of Artemia nauplii for toxicity tests - a critical analysis, Ecotoxicology and Environmental Sefety 2, 249-255 (1978)).

Bonitierung:
3 = 100 % Mortalität
2 = 50 %, <100 % Mortalität
1 = 20-50 % Mortalität
0 = keine Wirkung

**Tabelle 1**

| Ergebnis für einige erfindungsgemäße Verbindungen | | |
|---|---|---|
| Wirkstoff | µg Wirkstoff pro ml Inkubationsmedium | Bonitierung |
| Alsystin | 10 | 3 |
| Chlorofluazuron | 10 | 3 |
| Methoprene | 100 10 | 3 1-2 |
| Hydroprene | 100 | 3 |
| Pyriproxylen | 100 10 | 3 3 |

## Patentansprüche

1. Verwendung von Insektiziden mit entwicklungshemmender Wirkung zum Schutz von Gegenständen, welche mit See- oder Brackwasser in Kontakt kommen.

2. Verwendung von Insektiziden mit entwicklungshemmender Wirkung zur Herstellung von Antifouling-Mitteln.

3. Verwendung gemäß den Ansprüchen 1 und 2, wobei als Insektizide Verbindungen mit entwicklungshemmender Wirkung gemeint sind, die in der Lage sind, die Metamorphose von Larven der Crustaceen zum adulten Stadium zu inhibieren.

4. Verwendung gemäß den Ansprüchen 1 bis 3, wobei als Insektizid Benzoylharnstoffe wie Triflumuron, Chlorfluazuron, Diflubenzuron, Flufenoxuron, Flucycloxuron, Hexaflumuron, Penfluron, Teflubenzuron, Nitroimine und Nitromethylene wie 1-[(6-Chlor-3 -pyridinyl)-methyl]-4, 5-dihydro-N-nitro-1H-imidazol-2-amin(Imidacloprid), N-[(6-Chlor-3-pyriyl)methyl-]N²-cyano-N¹-methylacetamide (NI-25); 1-[4-(4-Chlorphenoxy)-3,5-dichlorphenyl]-3-(2,6-di-fluor-benzoyl)-harnstoff und N-[[2,5-Dichlor-4-(1,1,2,3,3,3-hexafluorpropoxy)-phenyl]-amino]-carbonyl]-2,6-difluorbenzamid genannt sind.

5. Mittel enthaltend neben der für Antifouling-Mittel üblichen Bestandteilen mindestens ein Insektizid mit entwicklungshemmender Wirkung.

6. Mittel gemäß Anspruch 5, enthaltend zusätzlich mindestens ein Algizid, Herbizid, Fungizid, Molluskizid und/oder andere Antifoulingwirkstoffe.

7. Verfahren zum Schutz von Gegenständen, welche mit See- oder Brackwasser in Verbindung kommen, dadurch gekennzeichnet, daß man mindestens ein Insektizid mit entwicklungshemmender Wirkung, auf die Gegenstände aufträgt bzw. diese mit dem Insektizid behandelt.

8. Verfahren zur Herstellung von Antifouling-Mittel, dadurch gekennzeichnet, daß Insektizide mit entwicklungshemmender Wirkung mit üblichen Antifouling-Mittel-Bestandteilen gemischt werden.

## Claims

1. Use of insecticides having a development-inhibiting action for protecting articles which come into contact with seawater or brackish water.

2. Use of insecticides having a development-inhibiting action for the preparation of anti-fouling compositions.

3. Use according to Claims 1 and 2, the intended insecticides being compounds having a development-inhibiting action which are capable of inhibiting the metamorphosis from crustacean larvae to the adult stage.

4. Use according to Claims 1 to 3, with benzoylureas such as triflumuron, chlorfluazuron, diflubenzuron, flufenoxuron, flucycloxuron, hexaflumuron, penfluron, teflubenzuron, nitroimines and nitromethylenes such as 1-[(6-chloro-3-pyridinyl)methyl]-4,5-dihydro-N-nitro-1H-imidazol-2-amine (imidacloprid), N-[(6-chloro-3-pyridyl)methyl]-N²-cyano-N¹-methylacetamide (NI-25); 1-[4-(4-chlorophenoxy)-3,5-dichlorophenyl]-3-(2,6-difluorobenzoyl)-urea and N-[[2,5-dichloro-4-(1,1,2,3,3,3-hexafluoropropoxy)-phenyl]-amino-carbonyl]-2,6-difluorobenzamide being mentioned as insecticide.

5. Compositions comprising at least one insecticide having a development-inhibiting action in addition to the customary constituents of anti-fouling compositions.

6. Compositions according to Claim 5, additionally comprising at least one algicide, herbicide, fungicide, molluscicide and/or other anti-fouling active substances.

7. Process for protecting articles which come into contact with seawater or brackish water, characterized in that at least one insecticide having a development-inhibiting action is applied to the articles or these articles are treated with the insecticide.

8. Process for the preparation of anti-fouling compositions, characterized in that insecticides having a development-inhibiting action are mixed with customary constituents of anti-fouling compositions.

## Revendications

1. Utilisation d'insecticides avec activité d'inhibition du développement pour protéger des objets qui entrent en contact avec de l'eau de mer ou de l'eau saumâtre.

2. Utilisation d'insecticides avec activité d'inhibition du développement pour préparer des agents antisalissures.

3. Utilisation suivant les revendications 1 et 2, où l'on envisage comme insecticides, des composés à activité d'inhibition du développement, qui sont en état d'inhiber la métamorphose de larves de crustacés vers le stade adulte.

4. Utilisation suivant les revendications 1 à 3, où l'on cite comme insecticide, les benzoylurées comme le triflumuron, le chlorfluazuron, le diflubenzuron, le flufenoxuron, le flucycloxuron, l'hexaflumuron, le penfluron, le téflubenzuron, les nitroimines et nitrométhylènes comme la 1-[(6-chloro-3-pyridinyl-méthyl]-4,5-dihydro-N-nitro-1H-imidazol-2-amine (imidaclopride), le N-[(6-chloro-3-pyridyl)-méthyl]-N²-cyano-N¹-méthylacétamide (NI-25) ; la 1-[4-(4-chlorophénoxy)-3,5-dichlorophényl]-3-(2,6-difluorobenzoyl)urée et le N-[[[2 ,5-dichloro-4-(1,1,2,3,3,3-hexafluoropropoxy)phényl]amino]carbonyl]-2,6-difluorobenzamide.

5. Agent contenant, en plus des constituants habituels pour un agent antisalissures, au moins un insecticide à activité d'inhibition du développement.

6. Agent suivant la revendication 5, contenant en outre, au moins un algicide, herbicide, fongicide, molluscicide et/ou d'autres agents actifs antisalissures.

7. Procédé de protection d'objets qui entrent en contact avec de l'eau de mer ou de l'eau saumâtre, caractérisé en ce que l'on applique sur l'objet, au moins un insecticide à activité d'inhibition du développement ou que l'on traite celui-ci avec l'insecticide.

8. Procédé de préparation d'agent antisalissures, caractérisé en ce qu'un insecticide à activité d'inhibition du développement est mélangé aux constituants habituels des agents antisalissures.
